# FASCICULE DE BREVET EUROPEEN

(11) **EP 0 832 172 B1**
(45) Date de publication et mention de la délivrance du brevet: **27.09.2000**
(21) Numéro de dépôt: 96922106.8
(22) Date de dépôt: 12.06.1996
(51) Int. Cl.: C10L 1/22, C10L 1/14, C08F 8/32

(54) **ADDITIF BIFONCTIONNEL DE TENUE A FROID DES CARBURANTS ET COMPOSITION DE CARBURANT**
BIFUNKTIONELLER ZUSATZ FÜR MOTORBRENNSTOFFKALTBESTÄNDIGKEIT, UND MOTORBRENNSTOFFZUSAMMENSETZUNG
BIFUNCTIONAL COLD RESISTANCE ADDITIVE FOR FUELS, AND FUEL COMPOSITION

(30) Priorité: 13.06.1995 FR 9507008
(43) Date de publication de la demande: 01.04.1998
(73) Titulaire: ELF ANTAR FRANCE, 92400 Courbevoie (FR)
(72) Inventeur: MALLET, Catherine, F-69004 Lyon (FR); ROZIER, Jean, F-69120 Vaulx-en-Velin (FR)
(74) Mandataire: Boillot, Marc
(86) Numéro de dépôt international: FR9600893
(87) Numéro de publication internationale: WO9641850

(56) Documents cités:
- EP-A- 0 126 363
- EP-A- 0 485 773
- BE-A- 759 322
- FR-A- 1 167 856
- FR-A- 2 309 583
- FR-A- 2 528 435
- FR-A- 2 567 536
- FR-A- 2 592 658
- GB-A- 802 588

## Description

La présente invention concerne des additifs bifonctionnels permettant de limiter et d'éviter la sédimentation des paraffines contenues dans les distillats moyens de coupe de raffinage de température comprise entre 150 et 450°C, et de maintenir une bonne dispersion des cristaux formés à ces températures en vue d'améliorer les propriétés d'opérabilité à froid de ces distillats jusqu'à des températures au-delà de -10°C et même au-delà de -20°C.

L'invention vise en outre des compositions d'additifs pour améliorer l'opérabilité à froid et également des carburants et des combustibles contenant le dit additif ou ces compositions d'additifs.

On sait depuis longtemps que les paraffines présentes dans les distillats moyens sont à l'origine de bouchages et de colmatages aux basses températures par cristallisation, sédimentation et dépôt soit au cours d'un stockage de ces distillats, soit durant leur transport en citernes, soit en cours de fonctionnement dans les moteurs diesels ou les chaudières industrielles ou domestiques. La température de cristallisation des paraffines constituant un facteur limitatif de l'utilisation de ces distillats moyens, il est usuel de les additiver afin de les adapter aux températures auxquelles ils seront utilisés ou stockés.

Si des températures d'opérabilité à froid de -10°C sont suffisantes dans beaucoup de régions, il est préférable de viser -20°C dans les régions proches des cercles polaires ou pendant l'hiver.

Dans la suite de la présente description, on utilise le terme combustible pour désigner les distillats moyens additivés qu'ils correspondent aux carburants moteurs ou aux fuels pour chaudières.

Adapter l'opérabilité à froid des combustibles est une obligation notamment pour éviter l'entraînement de cristaux de paraffines sédimentés en fond de réservoir ou de cuve dans tout le circuit, ces cristaux gênant la circulation normale du combustible et générant des bouchages et des colmatages, particulièrement au démarrage à froid des moteurs des véhicules terrestres ou des chaudières raccordées à des stockages extérieurs.

Pour améliorer l'opérabilité à froid de ces combustibles, les industriels ont du développer différents additifs aux fonctions diverses pour diminuer leur point d'écoulement, pour abaisser leur température limite de filtrabilité et surtout pour limiter la sédimentation des cristaux de paraffines en vue de maintenir une bonne dispersion de ceux-ci dans le combustible.

Parmi les additifs pour combustibles issus de distillats moyens, il est connu d'utiliser des additifs bifonctionnels tels que décrits dans le brevet allemand DE 4025586 cumulant les fonctions d'additif de filtrabilité et d'additif dispersant de cristaux de paraffines, ces additifs résultant de la polymérisation de composés contenant des motifs vinylaromatiques et des motifs acides monocarboxyliques insaturés, aminés par réaction avec une monoamine secondaire.

Pour ralentir ou éviter la sédimentation des cristaux de paraffines des distillats moyens et pour limiter leur tendance à s'émulsifier en présence d'eau, le brevet GB 2269824 revendique des additifs obtenus par réaction d'amines à longues chaînes comprenant de 12 à 22 atomes de carbone avec un acide carboxylique comprenant une double liaison oléfinique et une chaîne carbonée comprenant de 17 à 24 atomes de carbone dans un mélange de solvants, l'un non polaire et l'autre faiblement polaire.

La présente invention vise elle-même un additif bifonctionnel d'anti-sédimentation et de dispersion obtenu par polymérisation de deux composés comportant des groupements carboxyliques. Elle vise pour la demanderesse à substituer un seul additif à double fonction à deux additifs remplissant chacune de ces deux fonctions séparément, notamment comme ceux mentionnés dans la demande de brevet française 2.710.652. Ces deux additifs aux fonctions respectives d'anti-sédimentation et de dispersion et agissant de façon synergique; dans cette demande, l'additif d'anti-sédimentation résulte de la réaction d'un composé carboxylique aliphatique et d'une polyamine, et l'additif dispersant stabilisant est obtenu par polymérisation d'un ester et d'un dérivé dicarboxylique insaturé. L'utilisation d'un seul additif au lieu de deux présente notamment l'avantage d'éviter les problèmes de démixtion toujours susceptibles de se produire lors de mélanges de plusieurs composés, notamment dans les gazoles pour des problèmes d'homogénéité de combustible.

La présente invention a donc pour objet un additif bifonctionnel d'anti-sédimentation et de dispersion pour distillats moyens issus de coupes pétrolières de températures comprises entre 150 et 450°C, caractérisé en ce qu'il est constitué par au moins un copolymère modifié de masse moléculaire moyenne en poids (MW) comprise entre 500 et 5000, et de préférence comprise entre 1000 et 2000, obtenu en deux étapes,
i) la première étape consistant à copolymériser au moins un premier acide carboxylique insaturé substitué ou non avec au moins un ester alkylé d'au moins un deuxième acide carboxylique insaturé substitué ou non, identique ou non au premier, ces deux monomères correspondant à la formule générale (I) 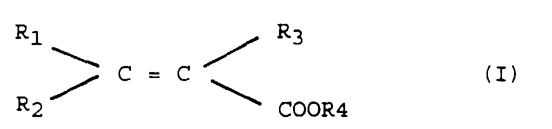 dans laquelle R₁ et R₂ sont identiques ou différents et sont choisis dans le groupe constitué par l'hydrogène, et les groupements alkyls linéaires ou ramifiés comprenant de 1 à 20 atomes de carbone, R₃ est l'hydrogène ou un groupement alkyl linéaire d'au plus trois atomes de carbone et R₄ pouvant être soit l'hydrogène dans le dit acide carboxylique soit un groupement alkyl comprenant de 1 à 25 atomes de carbone dans le dit ester alkylé, la réaction de polymérisation étant réalisée dans au moins un solvant hydrocarboné de préférence aromatique de point d'ébullition compris entre 70 et 250°C à une température comprise entre 100 et 200°C.
ii) la seconde étape consistant à amidifier à une température comprise entre 100°C et 200°C les groupements carboxyliques d'au moins un copolymère solvaté résultant de la dite première étape, par au moins une polyamine de formule générale (II) suivante: 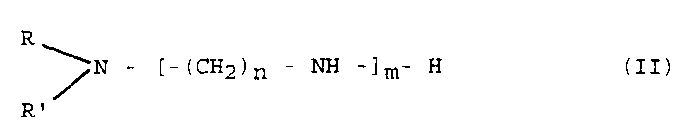 dans laquelle n et m sont des nombres entiers compris entre 1 et 8 , R est choisi dans le groupe constitué par l'hydrogène et des groupements alkyls linéaires comprenant de 1 à 5 atomes de carbone et R' est un groupement alkylé linéaire comprenant de 1 à 25 atomes de carbone.

Dans le cadre de la présente invention, le copolymère de synthèse résultant de la première étape contient de 45 à 65 % en mole d'au moins un motif acide carboxylique et de 35 à 55 % en mole d'au moins un motif ester alkylé.

Dans ce mode particulier de l'invention, on préfère parmi les acides carboxyliques, les acides acryliques et méthacryliques et leurs dérivés, et parmi les esters alkylés, les esters acryliques et méthacryliques et leur dérivés. De préférence, les polymères préférés de cette première étape sont des copolymères acide acrylique/esters méthacryliques et des copolymères acide méthacrylique/esters acryliques.

Dans les motifs ester alkylé des copolymères obtenus après la première étape,les groupements R₄ sont de préférence des chaînes alkylées linéaires comprenant 12 et 18 atomes de carbone.

Dans une forme préférée de la deuxième étape selon l'invention, les nombres entiers n et m dans la formule générale (II) de la polyamine sont compris respectivement entre 2 et 4 et entre 1 et 4 avec R'un groupement alkyle comprenant de préférence 12 ou 18 atomes de carbone.

Pour obtenir l'additif bifonctionnel selon l'invention, la réaction d'amidification consiste à faire réagir au moins une polyamine de formule (II) avec les copolymères résultant de la dite première étape pour un rapport molaire de la dite polyamine avec les groupements carboxyliques des dits copolymères compris entre 0.3 et 0.8.

L'additif selon l'invention présente l'avantage par rapport à la technique antérieure de remplir les mêmes fonctions d'antisédimentation et de dispersion des cristaux de paraffines au moyen d'un seul additif au lieu de deux précédemment, et ce jusqu'à au moins -25°C.

Un deuxième objet de l'invention est une composition d'additifs comprenant au moins 40% en poids de l'additif bifonctionnel d'anti-sédimentation et de dispersion.

Dans un mode préféré de ce deuxième objet de l'invention la composition comprend de 40 à 70% en poids du dit additif bifonctionnel et de 30 à 60% en poids d'au moins un additif de filtrabilité.

Cet additif de filtrabilité est choisi de préférence dans le groupe constitué par les copolymères éthylène-acétate de vinyle appelés encore EVA et les copolymères éthylène-propionate de vinyl encore appelés EVP.

Un troisième objet de la présente invention est le combustible contenant au moins un additif bifonctionnel anti-sédimentation et de dispersion selon l'invention, et de préférence la dite composition.

Dans le mode préféré de ce dit combustible, il est constitué par une proportion majeure de distillat moyen de point de distillation compris entre 150°C et 450°C et une proportion mineure du dit additif et, en particulier, une quantité mineure de la dite composition.

De préférence le combustible peut contenir de 0.01 à 0.20% en poids de la dite composition par référence au distillat moyen.

Les distillats moyens selon l'invention sont de préférence des gazoles et des fiouls domestiques issus de coupes pétrolières paraffiniques dont l'intervalle de distillation est compris entre 150 et 380°C selon la norme ASTM D86.

De tels combustibles selon l'invention sont utilisés soit dans les moteurs diesels de véhicules terrestres, soit dans les chaudières industrielles ou domestiques.

Dans la suite de la présente description, des exemples sont donnés à titre illustratifs mais non limitatifs de la portée de la présente invention.

### EXEMPLE 1

Le présent exemple décrit la synthèse d'additifs bifonctionnels selon l'invention, en particulier de type polyacrylate/acrylamide.

Dans une première étape, on prépare les copolymères acide méthacrylique/acrylates ou acide acrylique/méthacrylates. Dans une deuxième étape, ces copolymères sont amidifiés.

### Première étape de synthèse de l'additif selon l'invention :

Dans un ballon tétracol de 100 ml muni d'un agitateur, de deux ampoules de coulée et d'un thermomètre, on introduit 0.85 g d'un agent de transfert, ici du dodecanethiol dans llg de SOLVANTAR 340, solvant aromatique commercialisé par ELF ANTAR FRANCE, ce mélange constituant le mélange réactionnel.

Un mélange constitué par llg de SOLVANTAR 340 et 0.20g de peroxyde de ditertiobutyle ayant la fonction d'initiateur de polymérisation, est introduit dans une des ampoules de coulée fermée. Pour chacun des deux types de copolymères recherchés, on introduit dans la seconde ampoule de coulée le mélange acide/ester (les mélanges acides acrylique/méthacrylates ou acide méthacrylique/acrylates) dans environ 15g de SOLVANTAR 340. On chauffe le ballon puis on maintient sa température à 140°C pour augmenter la température du mélange réactionnel. A cette température, on fait couler 1ml du mélange contenant l'initiateur de polymérisation dans le mélange réactionnel. Puis, les deux mélanges des deux ampoules de coulée sont introduits simultanément dans le mélange réactionnel perpétuellement agité, en continu pendant trois heures. Après addition complète des réactifs, le mélange réactionnel est encore maintenu à 140°C pendant 1H30 sous agitation. Les produits de cette synthèse sont des produits limpides de couleurs jaune paille à jaune d'or, contenant 50% en poids de matières actives ou copolymère.

### Deuxième étape de synthèse de l'additif selon l'invention correspondant à l'amidification :

Une ampoule de coulée du ballon est remplacée par un réfrigérant de type DEAN and STARK pour récupérer l'eau formée au cours de cette deuxième étape. Dans le ballon maintenu à 140°C, on ajoute au milieu réactionnel contenant le copolymère 0.30 g de catalyseur d'amidification (ici de l'acide paratoluène sulfonique), puis on coule en moins de cinq minutes une quantité suffisante de triamine en vue d'amidifier toutes les fonctions carboxyliques COOH disponibles du copolymère. Le nouveau mélange réactionnel ainsi obtenu est chauffé et maintenu sous reflux entre 175 et 185 °C pendant trois heures, l'eau formée est soutirée en continu. Le produit récupéré est limpide mais de couleur brun/orangé: il contient 50% en poids de matières actives.

Quatre additifs bifonctionnels selon l'invention ont été préparés: le tableau 1 ci-après donne les quantités des composés acide carboxylique et esters carboxyliques qui ont été utilisés.

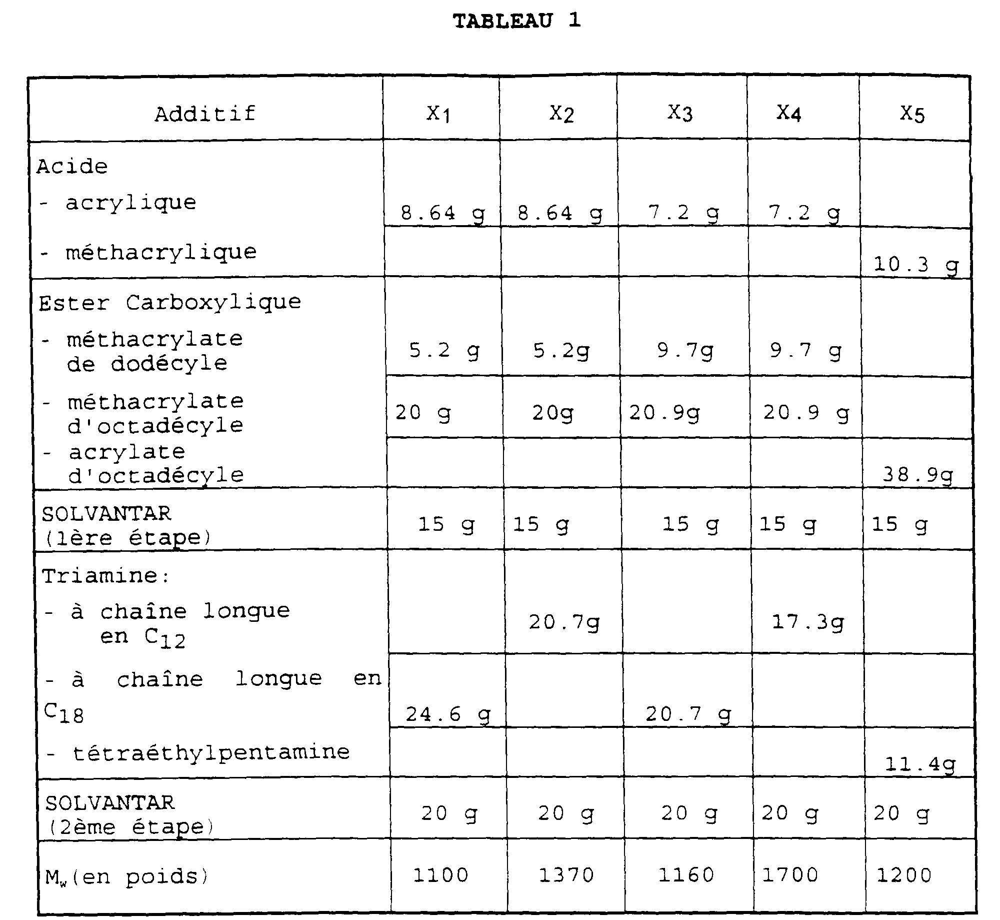

### EXEMPLE II

Le présent exemple vise à montrer l'efficacité des additifs bifonctionnels selon l'invention, X₁, X₂, X₃, X₄ et X₅ dans leur bifonctionnalité d'anti-sédimentation et de dispersion dans différents distillats moyens en présence d'un additif de filtrabilité par comparaison avec ces mêmes gazoles contenant seulement l'additif de filtrabilité. Il vise également la comparaison de l'efficacité de ces compositions avec celle d'une composition témoin T obtenue par mélange des trois additifs selon la demande FR 2.710.652.

Trois gazoles ou distillats moyens appelés A, B et C ont été additivés: leurs caractéristiques sont données dans le tableau 2 ci-après.

**TABLEAU 2**

| | A | B | C |
|---|---|---|---|
| PT (°C) | - 3 | - 9 | - 2 |
| TLF (°C) | - 3 | - 7 | - 2 |
| PE (°C) | - 15 | - 12 | - 9 |
| DISTILLATION : | | | |
| PI (°C) | 176 | 162 | 181 |
| | | | |
| 5 % | 199 | 185 | 208 |
| 10 % | 208 | 194 | 220 |
| 20 % | 222 | 212 | 237 |
| 30 % | 238 | 230 | 251 |
| 40 % | 252 | 246 | 264 |
| 50 % | 264 | 260 | 276 |
| 60°% | 277 | 274 | 288 |
| 70°% | 291 | 287 | 300 |
| 80 % | 310 | 304 | 315 |
| 90 % | 338 | 325 | 337 |
| 95 % | 361 | 340 | 354 |
| | | | |
| PF | 371 | 354 | 363 |
| | | | |
| 90 - 20 (°C) | 116 | 142 | 100 |
| | | | |
| PF - 90 (°C) | 33 | 29 | 26 |
| | | | |
| MV 15 (kg/1) | 0,8372 | 0,8352 | 0,8297 |
| PEC (°C) | 70 | 65 | 75 |
| % poids Paraffines dans le gazole | 11,9 | 15,4 | 15,8 |
| | | | |
| % poids Paraffines < C₁₃ | 8,8 | 9,7 | 7 |
| | | | |
| % poids Paraffines C₁₃ à C₁₇ | 75,2 | 66 | 72 |
| | | | |
| % poids Paraffines C₁₇ à C₂₃ | 16 | 22 | 21 |

Dans chacun des trois gazoles A, B et C, on ajoute 0.06 % en poids d'un additif de filtrabilité ou TLF, le CE 3144 commercialisé par BASF pour former des échantillons témoins.

Dans un deuxième temps, on prépare des échantillons de gazoles additivés selon l'invention comprenant 0.06% en poids de la composition selon l'invention qui comprend 60 % en poids d'additif TLF (le même que celui précédemment cité), et 40 % en poids d'un des cinq échantillons d'additifs bifonctionnels selon l'invention de l'exemple 1.

Pour analyser l'efficacité de l'additivation, chaque gazole additivé est conditionné dans une éprouvette de 250 cm³ fermée, placée pendant 24 heures dans une armoire froide à -15°C. Après 24 heures, on observe l'homogénéité de l'échantillon caractéristique de la nature et de la qualité des différentes phases présentes. En outre, on mesure la température du point de trouble des phases supérieures et inférieures apparues dans l'éprouvette selon la méthode ISO 3015. On mesure la TLF ou température de filtrabilité de la phase inférieure de l'éprouvette selon la norme européenne EN 116.

Lorsque dans l'éprouvette, la phase supérieure est trouble, une grande proportion de paraffines est restée en suspension et la fonction anti-sédimentation de l'additif est efficace. Lorsque cette phase est claire, les paraffines sont généralement tombées en fond d'éprouvette et ont sédimentées.

Par ailleurs, plus les températures de cristallisation commençante des phases inférieures et supérieures sont proches, et plus les valeurs de TLF sont proches, plus le gazole est resté homogène au cours des 24 heures de traitement à froid, donc plus la dispersion est bonne.

Le détail des compositions et des efficacités des additifs et des compositions testées est donnée dans le tableau 3 ci-après.

**TABLEAU 3**

| | Phase sédimentée % vol. | Phase trouble % vol. | Phase claire % vol. | Ecart entre PT (°C) | Ecart entre TLF (°C) | TLF (°C) |
|---|---|---|---|---|---|---|
| TLF | | | | | | |
| GO A | 56 | 0 | 44 | | | -18 |
| GO B | 28 | 0 | 72 | | | -16 |
| GO C | 36 | 0 | 64 | | | -15 |
| | | | | | | |
| X₁ + TLF | | | | | | |
| GO A | 0 | 100 | 0 | -2 | -2 | -22 |
| GO B | 12 | 88 | 0 | -9 | -3 | -14 |
| GO C | 0 | 100 | 0 | -1 | -2 | -15 |
| | | | | | | |
| X₂ + TLF | | | | | | |
| GO A | 0 | 100 | 0 | -1 | +2 | -19 |
| GO B | 12 | 88 | 0 | -10 | 0 | -15 |
| GO C | 84 | 16 | 0 | -6 | -3 | -18 |
| | | | | | | |
| X₃ + TLF | | | | | | |
| | | | | | | |
| GO A | 12 | 88 | 0 | -6 | -4 | -23 |
| GO B | 8 | 92 | 0 | -8 | -2 | -14 |
| GO C | 0 | 100 | 0 | -2 | -3 | -17 |
| | | | | | | |
| X₄ + TLF | | | | | | |
| GO A | 0 | 100 | 0 | -2 | -2 | -22 |
| GO B | 12 | 88 | 0 | -2 | 0 | -17 |
| GO C | 0 | 100 | 0 | -2 | 0 | -17 |
| | | | | | | |
| X₅ + TLF | | | | | | |
| GO A | 6 | 94 | 0 | -4 | -3 | |
| | | | | | | |
| T | | | | | | |
| GO B | 3 | 97 (légèrement trouble) | 0 | 3 | -1 | -12 |
| GO C | 48 | 52 (légèrement trouble) | 0 | -11 | -2 | -11 |
| T = 40 % TLF + 36 % (additif antisédimentation CP 9555 commercialisé par ELF ANTAR FRANCE) + 24 % Dispersant-stabilisant (selon demande de brevet FR 2.710.652) | | | | | | |

Le tableau 3 confirme qu'un additif bifonctionnel selon l'invention, associé à un additif de filtrabilité présente de bonnes propriétés anti-sédimentation et de dispersion comparé à l'additif de TLF seul et à un mélange à 3 composés comme décrit dans la demande FR 2.710.652 et cela quel que soit la nature et la répartition des composés à chaînes paraffiniques dans les gazoles. Les échantillons d'additifs selon l'invention X1 à X5 améliorent l'opérabilité à froid des gazoles à basse température tout en limitant très fortement la sédimentation des cristaux de paraffines (on obtient une phase sédimentée de faible volume et des écarts entre points de trouble des phases inférieure et supérieure de l'éprouvette inférieure à 10 en valeur absolue).

En outre, les résultats soulignent l'universalité de la composition de l'invention dans différents types de gazoles, les gazoles A, B et C étant caractéristiques de ceux-ci. En outre, aucune démixtion ne s'est produite avec les compositions X1 à X5 même après plusieurs jours.

## Revendications

1. Additif bifonctionnel d'anti-sédimentation et de dispersion pour distillats moyens issus de coupes pétrolières de températures comprises entre 150 et 450°C, caractérisé en ce qu'il est constitué par au moins un copolymère modifié de masse moléculaire moyenne comprise entre 500 et 5000, et de préférence comprise entre 1000 et 2000, obtenu en deux étapes,
**i)** la première étape consistant à copolymériser au moins un premier acide carboxylique insaturé substitué ou non avec au moins un ester alkylé d'au moins un deuxième acide carboxylique insaturé substitué ou non, identique ou différent du premier, ces dits monomères correspondant à la formule générale (I) 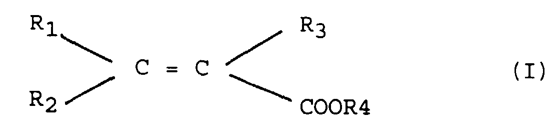 dans laquelle R₁ et R₂ sont identiques ou différents et sont choisis dans le groupe constitué par l'hydrogène, et les groupements alkyls linéaires ou ramifiés comprenant de 1 à 20 atomes de carbone, R₃ est l'hydrogène ou un groupement alkyl linéaire d'au plus trois atomes de carbone et R₄ pouvant être soit l'hydrogène dans le dit acide carboxylique soit un groupement alkyl comprenant de 1 à 25 atomes de carbone dans le dit ester alkylé, la réaction de polymérisation étant réalisée dans au moins un solvant hydrocarboné de préférence aromatique de point d'ébullition compris entre 70 et 250°C à une température comprise entre 100 et 200°C, ledit copolymère comprenant de 45 à 65% mole d'au moins un motif acide carboxylique et de 55 à 35% mole d'au moins un motif ester alkylé.
**ii)** la seconde étape consistant à amidifier à une température comprise entre 100°C et 200°C les groupements carboxyliques d'au moins un copolymère solvaté résultant de la dite première étape, par au moins une polyamine de formule générale (II) suivante: 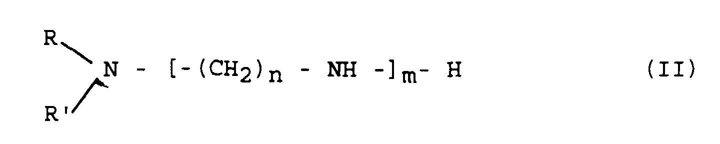 dans laquelle n et m sont des nombres entiers compris entre 1 et 8 , R est choisit dans le groupe constitué par l'hydrogène et des groupements alkyl linéaires comprenant de 1 à 5 atomes de carbone et R' est un groupement alkylé linéaire comprenant de 1 à 25 atomes de carbone.

2. Additif selon la revendication 1 caractérisé en ce que les acides carboxyliques sont choisis parmi les acides acryliques et méthacryliques, et les esters alkylés parmi les esters acryliques et méthacryliques et leur dérivés.

3. Additif selon l'une des revendications 1 et 2 caractérisé en ce que les copolymères résultant de la dite première étape sont choisis parmi les copolymères acide acrylique/esters méthacryliques et les copolymères acide méthacrylique/esters acryliques.

4. Additif selon l'une des revendications de 1 à 3 caractérisé en ce que, dans les motifs ester alkylé des copolymères obtenus après la première étape,les groupements R₄ sont de préférence des chaînes alkylées linéaires comprenant 12 et 18 atomes de carbone.

5. Additif selon l'une des revendications 1 à 4 caractérisé en ce que dans la formule générale (II) de la polyamine, les nombres entiers n et m sont compris respectivement entre 2 et 4 et entre 1 et 4 et R' désigne un groupement alkyle comprenant 12 ou 18 atomes de carbone.

6. Composition d'additifs comprenant au moins 40% en poids de l'additif bifonctionnel d'anti-sédimentation et de dispersion selon l'une des revendications 1 à 5.

7. Composition selon la revendication 6 caractérisée en ce qu'elle comprend de 40 à 70% en poids du dit additif bifonctionnel et de 30 à 60 % en poids d'au moins un additif de filtrabilité choisi de préférence dans le groupe constitué par les copolymères éthylène-acétate de vinyle appelés encore EVA et les copolymères éthylène-propionate de vinyle encore appelés EVP.

8. Combustible contenant au moins un additif bifonctionnel anti-sédimentation et de dispersion selon les revendications 1 à 5, et de préférence la dite composition selon les revendications 6 et 7.

9. Combustible selon la revendication 8 caractérisé en ce qu'il est constitué par une proportion majeure de distillat moyen de point de distillation compris entre 150°C et 450°C et une proportion mineure du dit additif.

10. Combustible selon l'une des revendications 8 et 9 caractérisé en ce qu'il contient une proportion majeure du dit distillat et une proportion mineure de la dite composition.

11. Combustible selon l'une des revendications de 8 à 10 caractérisé en ce qu'il contient de 0.01 à 0.20% en poids de la dite composition par référence au distillat moyen.

## Patentansprüche

1. Bifunktionelles, die Sedimentation verhinderndes und die Verteilung aufrechterhaltendes Additiv für Mitteldestillate aus Erdölfraktionen bei Temperaturen von 150 bis 450°C, dadurch **gekennzeichnet,** dass es zumindest aus einem modifizierten Copolymer mit einer durchschnittlichen Molekularmasse von 500 bis 5000 und vorzugsweise von 1000 bis 2000 besteht, das in zwei Stufen erhalten wird, wobei
i) die erste Stufe in der Copolymerisation wenigstens einer ersten ungesättigten Carbonsäure besteht, die gegebenenfalls durch wenigstens einen Alkylester substituiert ist, mit wenigstens einer zweiten ungesättigten Carbonsäure, die gegebenenfalls substituiert ist und mit der ersten identisch ist oder sich von dieser unterscheidet, wobei diese Monomere der allgemeinen Formel (I) 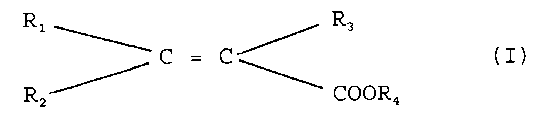 entsprechen, worin R₁ und R₂ gleich oder verschieden sind und aus der Gruppe, bestehend aus Wasserstoff und unverzweigten oder verzweigten Alkylgruppen mit 1 bis 20 C-Atomen, ausgewählt werden, R₃ Wasserstoff oder eine unverzweigte Alkylgruppe mit wenigstens drei C-Atomen darstellt und R₄ entweder den Wasserstoff in der genannten Carbonsäure oder eine 1 bis 25 C-Atome umfassende Alkylgruppe im Alkylester darstellt, die Polymerisationsreaktion in wenigstens einem Kohlenwasserstofflösungsmittel, vorzugsweise in einem aromatischen mit einem Siedepunkt zwischen 70 und 250°C bei einer Temperatur zwischen 100 und 200°C durchgeführt wird, und das Copolymer 45 bis 65 Mol-% wenigstens eines Carbonsäurefragments und 55 bis 35 Mol-% wenigstens eines Alkylesterfragments umfasst, und
ii) die zweite Stufe in der Amidierung der Carboxylgruppen wenigstens eines aus der ersten Stufe stammenden solvatisierten Copolymers mit wenigstens einem Polyamin der allgemeinen Formel (II) 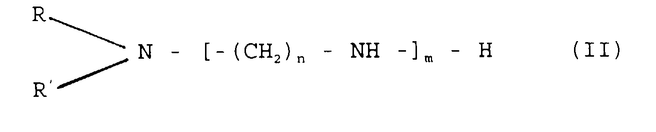 worin n und m ganze Zahlen von 1 bis 8 bedeuten, R aus der Gruppe, bestehend aus Wasserstoff und unverzweigten Alkylgruppen mit 1 bis 5 C-Atomen, ausgewählt wird und R' eine unverzweigte Alkylgruppe mit 1 bis 25 C-Atomen darstellt, bei einer Temperatur von 100 bis 200°C besteht.

2. Additiv nach Anspruch 1, dadurch **gekennzeichnet,** dass die Carbonsäuren unter Acryl- und Methacrylsäuren und die Alkylester unter Acryl- und Methacrylestern und ihren Derivaten ausgewählt werden.

3. Additiv nach einem der Ansprüche 1 und 2, dadurch **gekennzeichnet,** dass die auf der ersten Stufe anfallenden Copolymere unter Acrylsäure-Methacrylester-Copolymeren und unter Methacrylsäure-Acrylester-Copolymeren ausgewählt werden.

4. Additiv nach einem der Ansprüche 1 bis 3, dadurch **gekennzeichnet,** dass in den Alkylesterfragmenten der auf der ersten Stufe erhaltenen Copolymere die Gruppen R₄ vorzugsweise 12 bzw. 18 C-Atome umfassende unverzweigte Alkylketten sind.

5. Additiv nach einem der Ansprüche 1 bis 4, dadurch **gekennzeichnet,** dass in der allgemeinen Formel (II) des Polyamins die ganzen Zahlen n und m zwischen 2 und 4 bzw. zwischen 1 und 4 liegen und R' eine 12 bzw. 18 C-Atome umfassende Gruppe bezeichnet.

6. Additivgemisch, das wenigstens 40 Gew.-% des bifunktionellen, die Sedimentation verhindernden und die Verteilung aufrechterhaltenden Additivs nach einem der Ansprüche 1 bis 5 umfasst.

7. Gemisch nach Anspruch 6, dadurch **gekennzeichnet,** dass es 40 bis 70 Gew.-% des bifunktionellen Additivs und 30 bis 60 Gew.-% wenigstens eines Filterhilfsmittel umfasst, vorzugsweise ausgewählt aus der Gruppe, bestehend aus als EVA bezeichneten Ethylen-Vinylacetat-Copolymeren und als EVP bezeichneten Ethylen-Vinylpropionat-Copolymeren.

8. Treibstoff, der wenigstens ein bifunktionelles, die Sedimentation verhinderndes und die Verteilung aufrechterhaltendes Additiv gemäß den Ansprüchen 1 bis 5 und vorzugsweise das Gemisch gemäß den Ansprüchen 6 und 7 enthält.

9. Treibstoff nach Anspruch 8, dadurch **gekennzeichnet,** dass er aus einem Hauptanteil an Mitteldestillat mit einem Destillationspunkt zwischen 150 und 450°C und einem geringeren Anteil des Additivs besteht.

10. Treibstoff nach einem der Ansprüche 8 und 9, dadurch **gekennzeichnet,** dass er einen Hauptanteil des Destillats und einen geringeren Anteil des Gemisches enthält.

11. Treibstoff nach einem der Ansprüche 8 bis 10, dadurch **gekennzeichnet,** dass er 0,01 bis 0,20 Gew.-% des Gemisches, bezogen auf das Mitteldestillat, enthält.

## Claims

1. Bifunctional anti-sedimentation and dispersion additive for middle distillates which are derived from petroleum fractions having temperatures of between 150 and 450°C, characterised in that it comprises at least one modified copolymer having an average molecular weight of between 500 and 5000, and preferably of between 1000 and 2000, obtained in two stages,
i) the first stage consisting in copolymerising at least one first substituted or unsubstituted unsaturated carboxylic acid with at least one alkyl ester of at least one second substituted or unsubstituted unsaturated carboxylic acid which is identical to or different from the first, those monomers corresponding to the general formula (I) 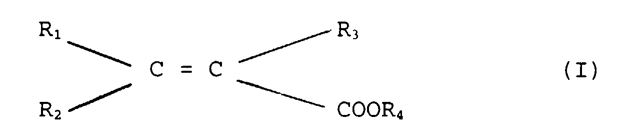 wherein R₁ and R₂ are identical or different and are selected from the group constituted by hydrogen, and linear or branched alkyl groups comprising from 1 to 20 carbon atoms, R₃ is hydrogen or a linear alkyl group having a maximum of 3 carbon atoms and it being possible for R₄ to be either hydrogen in the carboxylic acid or an alkyl group comprising from 1 to 25 carbon atoms in the alkyl ester, the polymerisation reaction being effected in at least one hydrocarbon solvent, which is preferably aromatic and whose boiling point is between 70 and 250°C, at a temperature of between 100 and 200°C, the copolymer comprising from 45 to 65 mole % of at least one carboxylic acid unit and from 55 to 35 mole % of at least one alkyl ester unit,
ii) the second stage consisting in amidating at a temperature of between 100°C and 200°C the carboxylic groups of at least one solvated copolymer resulting from the first stage by at least one polyamine of the following general formula (II) : 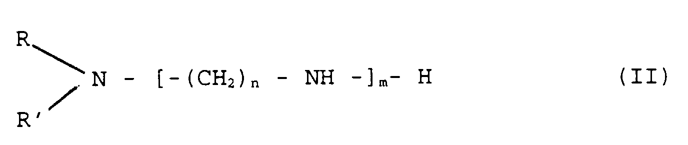 wherein n and m are whole numbers between 1 and 8, R is selected from the group constituted by hydrogen and linear alkyl groups comprising from 1 to 5 carbon atoms and R' is a linear alkyl group comprising from 1 to 25 carbon atoms.

2. Additive according to claim 1, characterised in that the carboxylic acids are selected from acrylic and methacrylic acids and the alkyl esters from acrylic and methacrylic esters and derivatives thereof.

3. Additive according to either claim 1 or claim 2, characterised in that the copolymers resulting from the first stage are selected from acrylic acid/methacrylic ester copolymers and methacrylic acid/acrylic ester copolymers.

4. Additive according to any one of claims 1 to 3, characterised in that, in the alkyl ester units of the copolymers obtained after the first stage, the R₄ groups are preferably linear alkyl chains comprising 12 and 18 carbon atoms.

5. Additive according to any one of claims 1 to 4, characterised in that, in the general formula (II) of the polyamine, the whole numbers n and m are between 2 and 4 and between 1 and 4, respectively, and R' designates an alkyl group comprising 12 or 18 carbon atoms.

6. Composition of additives comprising at least 40% by weight of the bifunctional anti-sedimentation and dispersion additive according to any one of claims 1 to 5.

7. Composition according to claim 6, characterised in that it comprises from 40 to 70% by weight of the bifunctional additive and from 30 to 60% by weight of at least one filterability additive which is preferably selected from the group constituted by ethylene/vinyl acetate copolymers, also known as EVA, and ethylene/vinyl propionate copolymers, also known as EVP.

8. Fuel containing at least one bifunctional anti-sedimentation and dispersion additive according to claims 1 to 5 and preferably the composition according to claims 6 and 7.

9. Fuel according to claim 8, characterised in that it is constituted by a greater proportion of middle distillate having a distillation point of between 150°C and 450°C and a lesser proportion of the additive.

10. Fuel according to either claim 8 or claim 9, characterised in that it contains a greater proportion of the distillate and a lesser proportion of the composition.

11. Fuel according to any one of claims 8 to 10, characterised in that it contains from 0.01 to 0.20% by weight of the composition relative to the middle distillate.
